# EUROPÄISCHE PATENTSCHRIFT

(11) **EP 0 420 998 B1**
(45) Veröffentlichungstag und Bekanntmachung des Hinweises auf die Patenterteilung: **26.06.1996**
(21) Anmeldenummer: 89118181.0
(22) Anmeldetag: 30.09.1989
(51) Int. Cl.: C08F 218/08, C09J 131/04

(54) **Wässrige Kunstharz-Suspension oder -Dispersion zur Verwendung als schmelzbarer Klebstoff**
Aqueous resin suspension or dispersion, and its use as a melt adhesive
Suspension ou dispersion aqueuse de polymère utilisable comme colle fusible

(43) Veröffentlichungstag der Anmeldung: 10.04.1991
(73) Patentinhaber: JOWAT LOBERS & FRANK GMBH & CO. KG, D-32758 Detmold (DE)
(72) Erfinder: Frank, Hannes, Dr. Dipl.-Chem., D-4930 Detmold (DE); Louven, Johannes Wilhelm, Dr. Dipl.-Chem., D-4934 Horn Bad Meinberg (Leopoldstal) (DE)
(74) Vertreter: Eikel, Cordula

(56) Entgegenhaltungen:
- US-A- 3 856 734
- US-A- 4 113 540
- CHEMICAL ABSTRACTS, Band 88, Nr. 22, 29. Mai 1978, Seite 17, Zusammenfassung Nr. 153262d, Columbus, Ohio, US; & CS- A-169 278

## Beschreibung

Die Erfindung betrifft eine wäßrige Schmelzklebstoff Suspension oder -Dispersion die als schmelzbarer Klebstoff einsetzbar ist.

Bei Klebstoffen unterscheidet man verschiedene Systeme.Dispersionen bzw. Suspensionen für den Klebstoff- und Siegelbereich enthalten üblicherweise Polyvinylalkohol oder Cellulosederivate als Schutzkolloide; diese Substanzen sind nicht schmelzbar. Auch die Polymerisate, die diese Schutzkolloide enthalten sind praktisch nicht schmelzbar, bzw. die Schmelzpunkte liegen im Bereich der Zersetzungstemperatur, so daß keine reversiblen Zustandsänderungen möglich sind.

Die trockenen Filme der Schutzkolloid enthaltenden Dispersionen werden nach Erwärmen allenfalls oberflächenklebrig.

Sofern man durch entsprechende Rezepturgestaltung und Einsatz von Emulgatoren zu feindispersen Kunstharzdispersionen mit niedrigem Polymerisationsgrad gelangt, sind diese Polymerisate zwar schmelzbar, bei Temperaturen die nur wenig über Raumtemperatur liegen, sind aus diesen Dispersionen hergestellte Beschichtungen jedoch nicht blockfrei.

Sie zeigen schlechte Wärmestandfestigkeit gegen Beanspruchung bei erhöhter Temperatur. Nach dem Aufschmelzen sind diese Produkte sehr niedrigviskos. Mit derartigen Beschichtungen oder Filmen kann keine Verklebung poröser Substrate erfolgen, da diese Polymerisate oberhalb der Aktivierungs- bzw. Schmelztemperatur in den Untergrund diffundieren.

Auf der Basis von Schmelzklebstoffen sind diese per Definition schmelzbar und enthalten z.B. EVA, Harze und Wachse.

Die Schmelzviskosität ist einstellbar, auch die Blockfestigkeit läßt sich durch Rezepturgestaltung ausreichend einstellen. Aufgrund der Polymerstruktur haben derartige Produkte jedoch einen breiten Erweichungsbereich, so daß die Wärmestandfestigkeit dieser Verklebung (verleimt wie in DIN 53 254 beschrieben) eine Temperatur von 70 - 80 °C nicht überschreitet.

Theoretisch ist es denkbar, durch Verwendung von EVA's mit sehr niedrigem Schmelzindex diese Nachteile zu überwinden. In der Praxis ist es jedoch nicht möglich, derartig hochviskose Polymere als Schmelzklebstoff in der gewünschten Schichtstärke von < 200 µm zu applizieren. Damit scheiden derartige Produkte für die Mehrzahl der Anwendungen wegen zu geringer Wärmestandfestigkeit aus. Schmelzklebstoffe müssen sowohl bei der Herstellung - zur optimalen Durchmischung der Rohstoffe - als auch vor der Applizierung - zur Erzielung optimaler Verarbeitungseigenschaften - für längere Zeit in Schmelzbehältern erhitzt und aufgeschmolzen werden. Hierbei neigen diese Systeme zur thermischen Zersetzung.

Schmelzklebstoffe auf der Basis von Fettsäurepolyamiden - z.B. die Kondensationsprodukte dimerisierter, höherer ungesättigter Fettsäuren und Diaminen- oder gesättigte Polyester - z.B. die Kondensationsprodukte von aromatischen oder/ und aliphatischen Dicarbonsäuren und Glykolen oder/und anderen Diolen - führen bei entsprechender Rezepturgestaltung zwar zu einer Verbesserung der Wärmestandfestigkeit um ca. 15 °C, jedoch der hohe Preis für diese Produkte beschränkt den Einsatz nur auf Ausnahmefälle, bzw. die Auftragstechnik wird zu kompliziert, da bei den erforderlichen erhöhten Arbeitstemperaturen die nötigen Schmelzklebstoffe erst recht zur Zersetzung neigen und Schutzgase erforderlich sind.

Bei Systemen auf Lösemittelbasis lassen sich aus der Lösung mit organischen Solvenzien die gewünschten Beschichtungen für spätere Verklebungen zwar herstellen, der Einsatz organischer Lösemittel verteuert jedoch diese Verfahren derartig, daß sie nur in Ausnahmefällen angewandt werden. Außerdem ist aus Umweltgründen der Verzicht auf Lösemittel dringend geboten, zumal nicht nur die Applikationstechnik - z.B. aufgrund des einzuhaltenden Explosionsschutzes - sehr teuer ist.

US-Patent 3,856734 offenbart die Herstellung einer wäßrigen Emulsion eines wärmehärtbaren Mischpolymerisats aus Vinylacetat, N-Methylolacrylamid und Acrylsäure unter Verwendung eines Redoxkatalysatorsystems. Die Emulsion kann durch Zugabe eines sauren Katalysators in eine Klebemittelzusammensetzung formuliert werden. Die Härtung Beginnt bei Raumtemperatur, sobald wie der Katalysator und die Emulsion gemischt worden sind.

Chemical Abstracts Band 88, Nr.22, Abstract Nr, 153262d beschreibt die Herstellung wäßriger Polymerdispersionen durch Emulsionscopolymerisation von Vinylacetat mit Acrylsäureestern unter Verwendung anorganischer Initiatoren.

Die US-A-4 113 540 beschreibt ein Klebemittel in Form eines Emulsionpolymers aus Vinylacetat mit 5 bis 50 Gew.% Alkylacrylat oder Methacrylat, bezogen auf Vinylacetat und Alkylacrylat oder Methacrylat, sowie 2 bis 10 Gew.%, bezogen auf das Gesamtgewicht des Polymers, eines Acryl- oder Methacrylesters eines Polyols, in dem wenigstens drei Hydroxylgruppen verestert sind. Dieses Klebemittel klebt bei warmer oder kalter Temperatur. Gute Klebeigenschaften werden beispielsweise bei 37,8°C erreicht.

Aufgabe der vorliegenden Erfindung ist es nun einen Klebstoff vorzuschlagen, der diese Nachteile nicht besitzt, keine aufwendige Apparatur zur Herstellung und Verarbeitung erfordert, der umweltfreundlich gehandhabt und angewandt werden kann.

Gelöst wird diese Aufgabe durch eine wäßrige Schmelzklebstoff-Suspension oder -Dispersion erhältlich durch Polymerisieren einer Mischung, welche 48 bis 98 Gew.% Essigsäurevinylester, 0 bis 50 Gew.% weitere alpha-olefinische ungesättigte Verbindungen, 1 bis 10 Gew.% Dispergatoren, 0 bis 10 Gew.% Schutzkolloide und 1 bis 10 Gew.% oberflächenaktive Substanzen enthält, mittels eines wäßrigen Suspensionspolymerisationsverfahrens unter Verwendung eines monomerlöslichen Initiators.

Erfindungsgemäß erfolgt der Auftrag aus wäßriger Phase, was einfacher und kostengünstiger ist als aus der geschmolzenen oder gelösten Phase.

Mit der erfindungsgemäßen wäßrigen Kunstharz-Suspension bzw. Dispersion erßielt man die folgenden Vorteile:
- Die Suspension enthält Wasser und keine umweltbelastenden Lösemittel.
- Die aufgetragene und trockene Beschichtung ist bei Raumtemperatur Kleb- bzw, blockfrei.
- Das Polymer kann durch beheizte Pressen oder auch in kleinen Aufschmelzbehältern zu einer Masse mit tatsächlich meßbaren Fließeigenschaften aufgeschmolzen werden.
- Der Schmelzbereich kann je nach Monomer-Zusammensetzung und Polymerisationsgrad eingestellt werden.
- Das Kunstharz der Dispersion diffundiert aufgrund der einzustellenden Partikelgrößen beim Auftragen auf zu verklebende Flächen nicht in saugfähige Substrate, sondern liegt dort vor, wo es für die Verklebung benötigt wird.
- Mit dem Klebstoff erhält man Wärmefestigkeiten, die mit konventionellen Schmelzklebstoffen nicht erreicht werden können.
- Der Klebstoff muß sowohl bei der Herstellung als auch bei der Applizierung keinen langen Temperaturbelastungen, wie sie bei Schmelzklebstoffen bekannt sind, standhalten und neigt deshalb nicht zur Zersetzung.

Die Suspension/Dispersion bildet nach Auftragen auf beliebige glatte, saugfähige oder nicht saugfähige Substrate und Abtrocknen oder Abtrennen des in der Mischung enthaltenen Wassers eine bei Raumtemperatur kleb- und blockfreie Beschichtung.

Unter Wärmezufuhr schmilzt die Beschichtung zu einer klebrigen, hochviskosen Flüssigkeit mit sehr guter Kohäsion und Adhäsion. Bei dem aufgeschmolzenen Klebstoffilm handelt es sich um eine echte Schmelze mit einer Viskosität je nach Einstellung zwischen 50.000 - 1.000.000 mPas bei ca. 220 °C. Die Schmelzindices der wasserfreien Polymerisate liegen je nach Einstellung nach DIN 53 735 zwischen 0,1 bis 400 g/10 Min. Die Verklebung und die bei der Verklebung erzielten Eigenschaften finden nur durch physikalische Prozesse (Änderung, des Aggregatzustandes) statt, was nicht ausschließt, daß unter Verwendung von Reaktivmonomeren chemische Vernetzungen stattfinden können. Nach dem bekannten Verfahren der Suspensionspolymerisation werden die Monomere mit den alpha-olefinischen ungesättigten Verbindungen in Wasser unter Einwirkung von Scherkräften emulgiert und mit Hilfe eines in Monomeren löslichen Initiators polymerisiert.

Als olefinisch ungesättigte Verbindungen können eingesetzt werden: Vinylester organischer Carbonsäuren, deren Kohlenstoffgerüst 1-20 C-Atome enthält; Ester der Acryl- oder Methacrylsäure mit C1- bis C20-Alkoholen; aliphatisch oder vorzugsweise aromatische alpha-beta ungesättigte Kohlenwasserstoffe, Mono- oder/und Diester der cis- oder trans-Butendisäure, alpha-beta ungesättigte Carbonsäuren sowie deren Derivate. Bevorzugt werden Essigsäure-, Propionsäure-, Isononansäure-, Dodecansäurevinylester, Acrylsäuremethyl-, -ethyl-, oder -butylester, Styrol, Vinyltoluol, cis-Butendisäuredibutylester, Acrylsäure oder Crotonsäure.

Zusätzlich zu den genannten alpha-olefinisch ungesättigten Verbindungen können polyfunktionelle Monomere eingesetzt werden, die eine bedingte Vernetzung in Polymeren ermöglichen.

Als Beispiel für derartige Monomere seien genannt: Ester von ungesättigten Carbonsäuren mit Alkoholen, die funktionelle Gruppen enthalten, wie Glycidylalkohol, mehrfunktionelle Alkohole wie Ethylen- Propylen- oder Butylenglykol, Vinyl- und Allylverbindungen sowie modifizierte Acrylamide.

Bei der Herstellung der erfindungsgemäßen Kunstharz-Suspension werden Dispergatoren, z.T. auch als Suspensionsstabilisatoren bezeichnet, eingesetzt, z.B. auf Basis feinteiliger, unlöslicher, meist anorganischer Substanzen, wie Kaolin, Talkum, Bentonit, Montmorillonit, Metallhydroxyde oder -phosphate bzw. auf Basis hochmolekularer, organischer Stoffe, die in Wasser löslich, jedoch in Monomeren unlöslich sind - z.B. Cellulosederivate, Stärkeether, Polyvinylalkohole oder dessen Copolymerisate, Salze der Polyacrylsäure oder Polymethacrylsäure bzw. deren Derivate, Butensäurederivate, Polyvinylpyrrolidon oder dessen Copolymerisate, Polystyrol oder dessen Copolymerisate sowie diverse Kondensationsharze.

Zur Erhöhung der Stabilität und zur Steuerung der Teilchengröße werden Modulatoren und oberflächenaktive Substanzen zugesetzt, z.B. Alkalisalze der Alkan- und Alkylarensulfonsäure, Alkalisalze der Alkylsulfate mit langen Alkylresten, Alkalisalze der Alkylsulfate mit langen Alkylresten, Alkalisalze von hohen Fettsäuren, ethoxylierte Produkte obiger oberflächenaktiver Substanzen, Bernsteinsäurederivate, ethoxylierte Fettamine.

Die Molmassen der Polymerisate lassen sich durch sogenannte Regler, wie Aldehyde, Ketone, Thiole, Terpene oder cycloaliphatische Enolether einstellen.

Als monomerlösliche Katalysatoren verwendet man Peroxyde oder Azoverbindungen.

Auf die Größe der anfallenden Perlen kann außer durch den Dispergator noch durch die Rührgeschwindigkeit und durch die Geometrie des Reaktorgefäßes Einfluß genommen werden. Die Teilchengröße variiert je nach Anwendung zwischen 0,5 µm bis zu einigen mm. Je nach Variante erhält man Polymerisate, die zur Phasentrennung neigen oder Produkte, die stabilen feindispersen Dispersionen gleichen.

Die durch Polymerisation hergestellte Suspension/Dispersion kann direkt für noch zu beschreibende Klebstoffanwendungen und Beschichtungen eingesetzt werden oder durch Zugabe, z.B. von Klebrigmachern, Thixotropiermittel oder weiteren Bindemitteln wie Dispersionen konfektioniert werden.

Die direkt aus der Polymerisation stammende oder die konfektionierte Suspension kann mittels Rakel, Walzenauftragssysteme, Tiefdruck oder -Rollenmaschinen über Düsen, im Sprüh- oder Tauchverfahren und auch im Transferverfahren auf beliebige glatte, saugfähige oder nicht saugfähige Flächen aufgetragen werden, wie z.B. Folien aus Kunststoff, Papier, kunstharzgetränkte Laminate; auf Holz oder Spanplatten; auf Vlies- auf der Basis von synthetischen oder natürlichen Fasern-; auf Schaumstoffe - z.B. auf Basis PE, PUR, PVC - oder auf Metalle.

Aufgrund der in der Polymerisation einzustellenden Partikelgröße diffundieren die Kunstharze allenfalls nur gering in eventuell saugfähige Untergründe. Nach Abtrocknen oder Abtrennen des Wassers liegt ein Kunstharzfilm von geringer Kohäsion und Adhäsion vor. Das Wasser kann zum einen durch Abdunsten, d.h. durch Aggregatzustandänderung, z.B. im Trockenkanal, zum anderen durch Absaugtechniken, einer Art Filtration entsprechend, abgetrennt werden. Im Gegensatz zu bisher bekannten Systemen bleibt nach Auftragen und Abtrocknen eine blockfreie Beschichtung zurück. Nach Erwärmen des Polymerisats mittels temperierter Pressen, heißer Rollen, Kalandern oder erhitzter Luft schmilzt die vorher blockfreie Schicht zu einem Klebstoff von hoher Kohäsion und guter Adhäsion. Solange der Klebstoff im flüssigen Zustand ist, kann gleichzeitig - oder sofort nach dem Erwärmen - das beschichtete Substrat mit anderen Teilen/Flächen verklebt werden.

### Beispiel:

In einem heiz- bzw. kühlbaren 1,5 l Laborreaktor mit einem Rückflußkühler, Rührer und Zudosiermöglichkeiten versehen, werden 650 g entionisiertes Wasser vorgelegt und 9.0 g Polyacrylsäure - 50 %ige Paste in Kristallöl 60 (Mol-Gew. 2.800.000)unter kräftigem Rühren hinzugefügt. Nach 10 minütigem Homogenisieren wird die Mischung mittels konzentriertem Ammoniak auf einen pH von 7 eingestellt.

In einem anderen Mischbehälter werden 220 g Essigsäurevinylester und 80 g Acrylsäurebutylester gemischt. Man löst in den Monomeren 0,6 g Dibenzoylperoxyd und 15 g ethoxyliertes Fettamin C₁₈H₃₇ N-(CH₂CH₂O-)_{x,y} wobei ₓ + _{y} = 20 (Mol-Gew.1149). Die Monomermischung wird im Reaktor in obige wäßrige Lösung unter kräftigem Rühren bei Raumtemperatur präemulgiert. Die Mischung wird nach Zugabe von erneut 0,1 g Dibenzoylperoxid unter Rühren bis zum schwachen Rückfluß aufgeheizt. 3 x werden jeweils 0,1 g Dibenzoylperoxid in Abständen von jeweils 2 Stunden zur Reaktionsmischung hinzugefügt. Nach beendetem Rückfluß (ca. 6 h) wird unter Wärmezufuhr über eine äußere Beheizung die Reaktionsmischung zur Endpolymerisation des Ansatzes 1 h bei 8C °C belassen. Zur pH-Wert-Regulierung werden nach Abkühlen des Suspensionspolymerisates 2 ml konzentrierter Ammoniak hinzugefügt. Man erhält eine Kunstharzsuspension mit einem Festkörper von ca. 28 % einer Viskosität von ca. 1000 mPas und neutralem pH-Wert, die zum Absetzen neigt. Der Bodensatz ist jedoch stets zur Einstellung der gleichen Eigenschaften wieder aufrührbar. Die homogenisierte Mischung kann mit einem 200 µm Spiralrakel auf Papierfolien aufgetragen werden. Nach Abtrocknen des Wassers ist die Beschichtung nach einem in der Industrie üblichen Test - 10 runde, beschichtete, trockene Folienausschnitte von je einer Fläche von 100 cm² werden übereinandergestapelt 72 Stunden mit einem Gewicht von 5 Kg zu belasten - vollkommen blockfrei. Nach Herunternahme des Gewichtes sind die jeweiligen Filme nicht verklebt, bzw. haften nicht aneinander.

Mittels temperierter Presse können die beschichteten Folien bei einer Temperatur von 160 °C und einer Preßzeit von 3 sec. mit der Beschichtung zu einem darunterliegenden, saugfähigen oder nichtsaugfähigen Substrat gerichtet verpreßt werden. Hierbei wird die Beschichtung aufgeschmolzen und die Folie auf das Substrat mit hervorragender Adhäsion, Kohäsion und Wärmefestigkeit verklebt.

Aufgezogene, getrocknete Kunststoffilme oder abgetrenntes getrocknetes Suspensionspolymerisat schmelzen in einem Ofen bei einer Temperatur von 250 °C zu einer fließfähigen Masse.

Mittels Brookfield-Viskosimeter Thermosel RVT wurde eine Viskosität von 800.000 mPas bei 220°C ermittelt.

## Patentansprüche

1. Wäßrige Schmelzklebstoff - Suspension oder - Dispersion erhältlich durch Polymerisieren einer Mischung, welche
48 bis 98 Gew.% Essigsäurevinylester,
0 bis 50 Gew.% weitere alpha-olefinische ungesättigte Verbindungen,
1 bis 10 Gew.% Dispergatoren,
0 bis 10 Gew.% Schutzkolloide und
1 bis 10 Gew.% oberflächenaktive Substanzen
enthält, mittels eines wäßrigen Suspensionspolymerisationsverfahrens unter Verwendung eines monomerlöslichen Initiators.

2. Verwendung der Schmelzklebstoff-Suspension oder - Dispersion nach Anspruch 1 für einen Schmelzklebstoff

## Claims

1. An aqueous hot-melt adhesive suspension or dispersion obtainable by polymerization of a mixture, which contains
48 to 98 weight per cent vinyl ester acetate,
0 to 50 weight per cent further alpha-olefinic unsaturated compounds,
1 to 10 weight per cent dispersants,
0 to 10 weight per cent protective colloids and
1 to 10 weight per cent surface active substances,
by means of an aqueous suspension polymerization process by using a monomer-solvent initiator.

2. An application of the hot-melt adhesive suspension or dispersion as claimed in claim 1 for a hot-melt adhesive.

## Revendications

1. Suspension ou dispersion aqueuse de colle à fusion pouvant être obtenue par polymérisation d'un mélange comprenant
48 à 98 % en poids d'ester vinylacétique,
0 à 50% en poids d'autres composés à l'oléfine alpha non saturés,
1 à 10% en poids d'agents dispersants,
0 à 10% en poids de colloïdes protecteurs et
1 à 10% d'agents tensio-actifs,
au moyen d'un procédé de polymérisation de suspension dans l'eau et avec utilisation d'un excitant soluble dans un monomère.

2. Utilisation dans une colle à fusion de la suspension ou de la dispersion selon la revendication 1.
